# EUROPEAN PATENT APPLICATION

(11) **EP 1 076 199 A1**
(43) Date of publication of application: **14.02.2001**
(21) Application number: 99830058.6
(22) Date of filing: 03.02.1999
(51) Int. Cl.: F16L 37/14

(54) **Hose with spring clamp at one end**

(71) Applicant: IABER S.p.A., I-22053 Lecco Como (IT)
(72) Inventor: Pastorino, Giorgio, Dr.-Ing., 23900 Malgrate (LECCO) (IT)
(74) Representative: Gandini, Claudio

(57) **Abstract**

The use of hoses with spring clamp at one end allows to simplify construction; moreover it enables to overcome the troubles caused by aging and squashing of conventional pipes.

## Description

At present copper (rigid) pipes are used; they are provided at their end with flat bands, seals and nuts to assure the mechanical connection to the other boiler's components. In the run of time this solution presents the drawback of water leakage due to aging of the seal and reduction of the tightening torque resulting from squashing of the seal itself; moreover it involves a higher number of components and longer assembly times.

With quick connecting pipes, it is no longer necessary to have threads, tightening nuts and seals: the spring at the end assures that the pipe maintains its position while the rubber o-ring assures long life sealing.

The use of hoses presents two further advantages : they must not be brazed at the end (insert) as on the contrary it was necessary with copper pipes and do not require to be pre-shaped, since they easily adapt to any type of path.

Since quick connection does not require any thread, it is possible to use plastic connections (which are part of the hydraulic distributor) instead of forged brass connections to be machined.

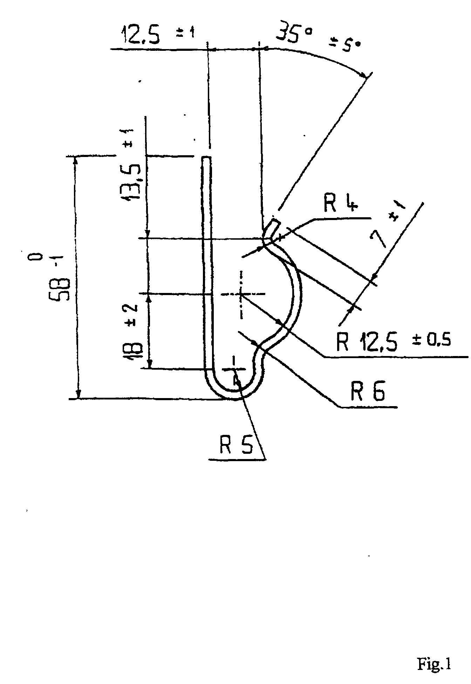

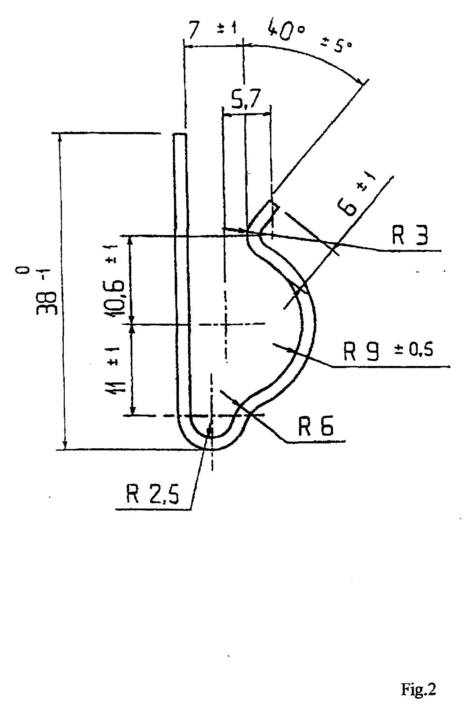

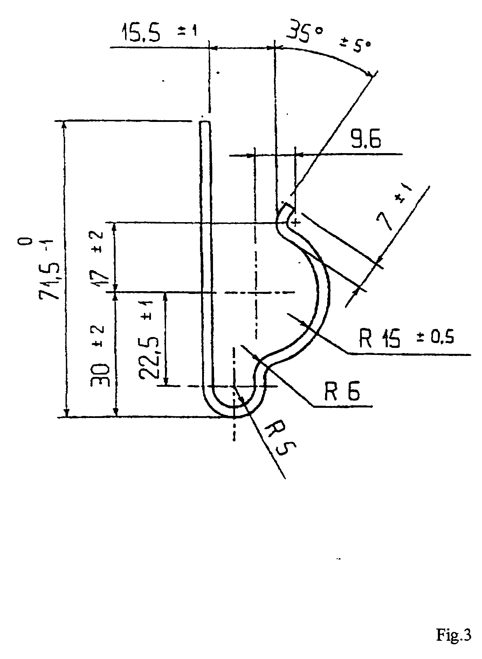

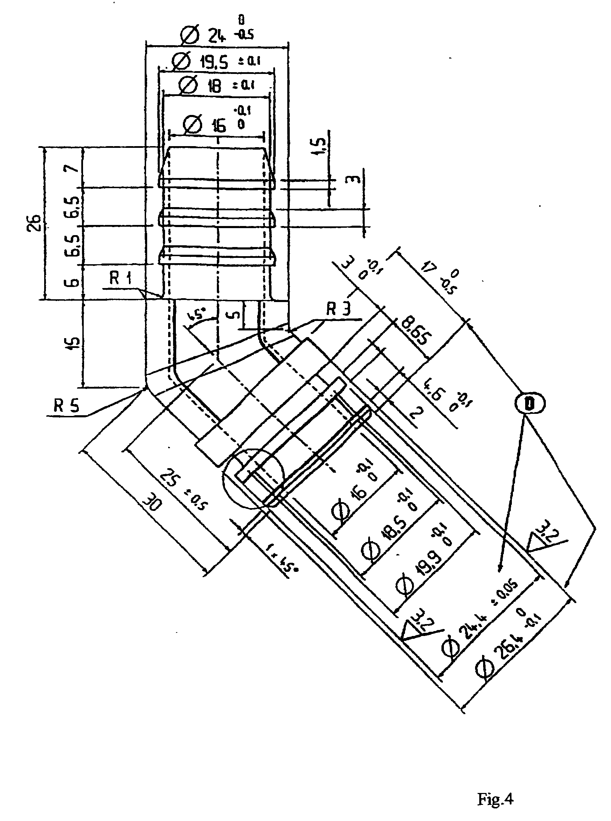

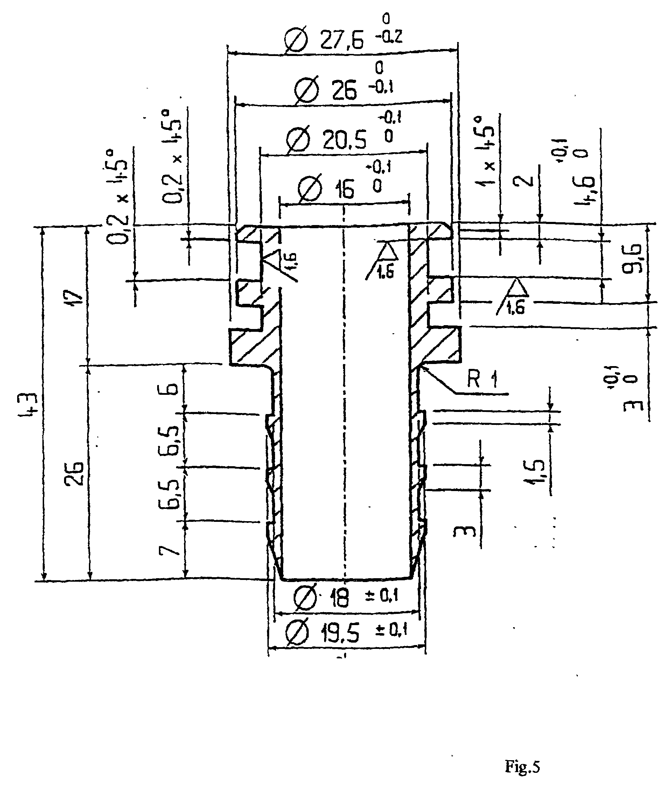

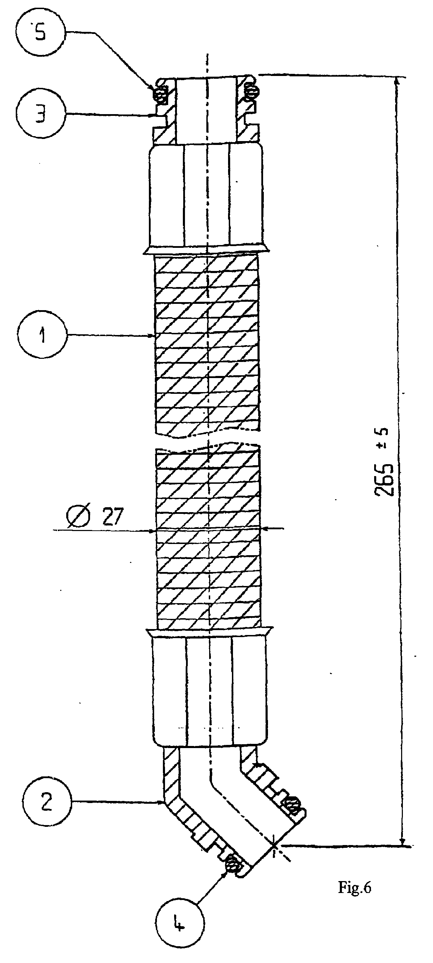

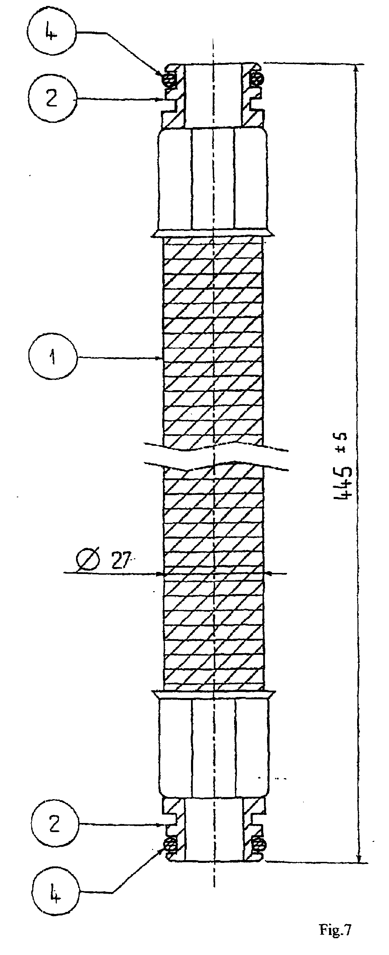

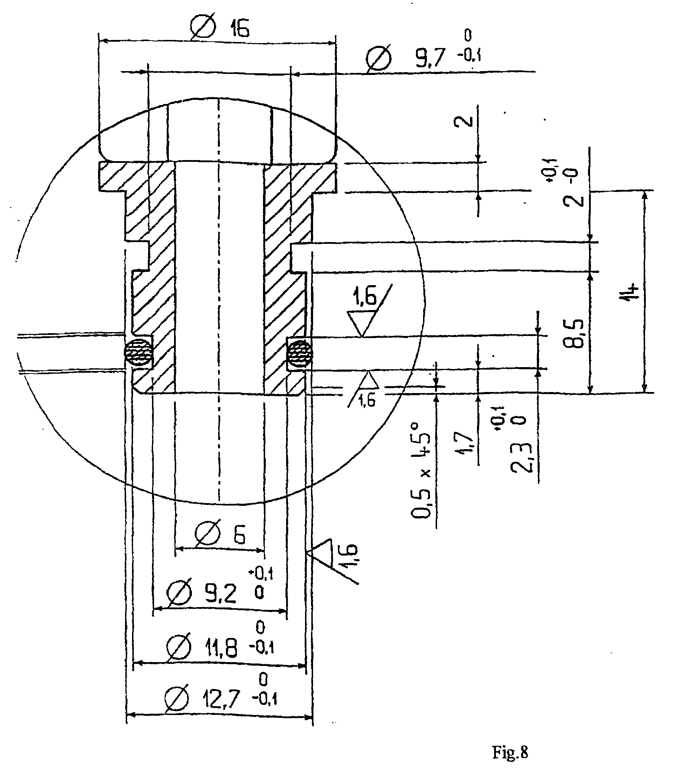

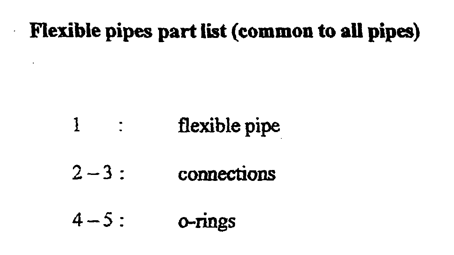

## Claims

1. The use of the subject hoses presents the following advantages :
1. Simple construction
2. Simple assembly
3. The spring at the end assures that the pipe maintains it position
4. The rubber o-ring assures long-life sealing
5. The hose does not require any welding at the brass end
6. The hose does not require any pre-shaping, since it easily adapts to any type of path
7. Since quick connection does not require any thread, it is possible to use plastic connections instead of forged brass connections to be machined.
